# EUROPEAN PATENT APPLICATION

(11) **EP 2 444 219 A2**
(43) Date of publication of application: **25.04.2012**
(21) Application number: 11183054.3
(22) Date of filing: 28.09.2011
(51) Int. Cl.: B29C 33/00, B29C 33/30, B29L 31/08

(54) **Flexible mold for manufacturing parts with composite materials**

(30) Priority: 28.09.2010 ES 201001244
(71) Applicant: Torres Martinez, Manuel, 31007 Pamplona (Navarra) (ES)
(72) Inventor: Torres Martinez, Manuel, 31007 Pamplona (Navarra) (ES)
(74) Representative: Intès, Didier Gérard André

(57) **Abstract**

The present invention relates to a flexible mold for manufacturing parts with composite materials, formed by a supporting structure (5) on which there is arranged an upper surface (6) to form thereon the parts to be manufactured, there being at the side edges of said upper surface (6) a succession of flaps (8) which are susceptible to swiveling, which have actuating mechanisms (10) for swiveling which are formed by a fixed portion and a moveable portion related by means of a sliding attachment with double guide, the moveable portion being attached to a flexible rope or belt (15) which is rolled up in a collection pulley (16).

## Description

### Technical Sector

The present invention relates with the manufacturing of structures with composite materials, such as aircraft wings wind turbine blades, etc., proposing a mold which allows manufacturing the component parts of said structures in an advantageous manner.

### State of the Art

The composite materials which are formed with carbon fibers, glass fibers, etc., and scavenger resins contribute an essential advantage in the sense of providing a great strength with a minimum weight, therefore said materials are increasingly used in industrial sectors such as the aeronautical sector, naval sector, renewable energy sector, civil construction sector, etc.

Said composite materials are commonly used, for example, to form the aerodynamic profiles of the aerodyne wings and stabilizers, as well as to form wind turbine blades, spinners, shafts and towers without these applications being limiting.

In that sense, for the manufacturing of the aircraft wings and wind blades, an embodiment having a framework structure on which there are fixed outer parts forming the lower surface, upper surface and the leading edge of the corresponding aerodynamic profile is known, the framework structure being determined with beams formed by "U"-shaped cross-section profiles the configuration of which changes dimensions and angles in the different longitudinal sectors of said beams, which is translated into significant design and manufacturing complexities of these beams.

For the manufacturing of large complex structures of that type with composite materials, it is therefore necessary to develop structural concepts, capital goods, tools and manufacturing methods which allow the repeatability of the production processes and their homogeneity in order to assure obtaining quality products at competitive prices.

### Object of the Invention

The present invention proposes a flexible mold which allows the manufacturing of complex parts components of the aerodynamic structures of aircraft wings, wind blades and other similar structures by means of automated processes which can be repetitive, quality results being obtained.

This mold object of the invention has a supporting structure formed by a combination of metal transversal frames and longitudinal frames of composite material, there being on said structure a surface which surface, at the longitudinal edges, has a succession of consecutive flaps which are susceptible to swiveling with respect to the middle longitudinal portion of the surface by means of articulation attachments formed from elastic material, each flap having actuation mechanisms which allows swiveling the flap between a horizontal position and an elevated position.

A mold which allows forming thereon in flat extension the development of parts having complex configurations such as "U"-shaped cross-section profiles, by means of applying taping layers with strips of composite material on the upper surface of the mold is thus obtained, such that the side flaps of the surface of the mold then swivel until the necessary position, the configuration of the profile to be formed is obtained and after the time necessary for curing the construction material, said profile can be demolded easily by returning the side flaps of the mold to the initial position.

The actuation mechanisms for actuating the swiveling of the flaps of the mold have a fixed portion fixed to the supporting structure and a moveable portion which is attached to the corresponding flap, said fixed and moveable portions being associated by a double guide between curved grooves defined in one of the portions and sliding bolts sliding through said grooves which are fixed in the other portion, while a flexible rope or belt which is collected in a rotating pulley is attached with respect to the moveable portion.

An arrangement which by means of the rotating operation of the pulleys of the actuating mechanisms allows swiveling the flaps of the mold to the corresponding angular position to determine the shape of the parts to be manufactured is thus obtained, the angle of formation along the part being able to be varied by means of variable positioning of the different flaps of the mold according to the areas in which they correspond.

Each flap can have one or more operating mechanisms, there being provided that the rotating pulleys of all the mechanisms of each side of the mold are incorporated in a common shaft for operating all the mechanisms at the same time by means of a single motor or manually by means of a crank. With this arrangement, the swiveling angle of each flap according to the configuration of the different portions of the parts to be formed is determined by arranging pulleys of different diameters in the corresponding mechanisms such that the common rotating operation of the mechanisms causes the swiveling which each of the flaps corresponds to.

The flaps of the mold can in turn incorporate at the outer edge other complementary flaps attached to them by articulations of elastic material, actuating mechanisms for swiveling the complementary flaps with respect to the first flaps, similar to the actuating mechanisms for swiveling the first flaps being arranged between the first flaps and the complementary flaps, said actuating mechanisms of the complementary flaps being provided with hydraulic or pneumatic operation cylinders.

With said arrangement of double swiveling flaps, several with respect to the central portion of the upper surface of the mold and others with respect to those first flaps, the mold allows making, in the same manner, parts with side wings in an angle with respect to the central portion and parts with side wings bended in two angles with respect to the central portion.

Therefore a mold offering the following advantages is obtained:
- Possibility of moving the swiveling flaps according to a controlled and coordinated trajectory which can be determined by design according to the shape of the parts to be obtained.
- Possibility of determining complex curving and twisting geometries with one or two side foldings to form parts of any dimension with complex shapes.
- Ease of demolding the parts formed by means of returning the swiveling flaps to the initial position, without the needs of disassembling elements for the demolding.
- Minimum number of motor elements for operating the functional assembly.
- Use of low cost actuator elements which can withstand the temperatures for curing the parts of composite materials to be manufactured.
- Robust structural assembly capable of elastically absorbing the expansions and contractions suffered due to the heating produced by curing the parts which are molded with an overall low cost installation.

Said mold object of the invention is therefore of very advantageous characteristics, acquiring own identity and preferred character for the application to which it is intended for.

### Description of the Drawings

Figure 1 shows in a schematic perspective view an embodiment of a wind turbine blade.
Figure 2 is an exploded perspective view of the assembly of the essential component elements of the wind turbine blade of the previous figure.
Figure 3 shows a transverse cross-section of a wind turbine blade formed with elements structured according to a sandwich embodiment to prevent buckling.
Figure 4 shows in perspective view a beam of the framework structure of the wind turbine blade of the previous figure.
Figure 5 shows in perspective view a sector of the flexible mold object of the invention, according to a non-limiting embodiment.
Figure 6 is a transverse cross-section view of the flexible mold of the previous figure.
Figure 7 shows in perspective view the sector of flexible mold of Figure 5 in the position for forming a part of composite material formed on the mold.
Figures 8A, 8B and 8C show a sequence of successive positions of the swiveling movement of a flap of the flexible mold.
Figure 9 shows a perspective view of the sector of flexible mold of Figure 5 with the flat development of a part of composite material formed on the upper surface thereof.
Figure 10 is a profile view of the previous figure.
Figure 11 is a view such as that of the previous figure, a leak-tight sheet having been placed on the flat development of the part to be manufactured.
Figure 12 is an enlarged view of the detail XII indicated in the previous figure.
Figure 13 is a perspective view of the sector of flexible mold with the part formed and covered with a leak-tight sheet in the position for configuring and curing the part to be obtained.
Figure 14 is a profile view with respect to the previous figure.
Figure 15 is a view such as the previous one with the swiveling wings of the flexible mold returned to the horizontal position for demolding the part formed.
Figure 16 is a view such as that of the previous figure with the part formed separated from the flexible mold.
Figure 17 is a detail view of an embodiment of the flexible mold with double swiveling flaps in the position for forming the flat development of a part on a double swiveling flap.
Figure 18 is a detail view such as that of the previous figure in the first swiveling position of the double swiveling flap.
Figure 19 is a detail view such as that of the previous figure in the second swiveling position of the double swiveling flap.
Figure 20 is a profile view of the flexible mold with double swiveling flaps in the position for forming and curing a part having a "U"-shaped cross-section with the side wings bended into two angles.

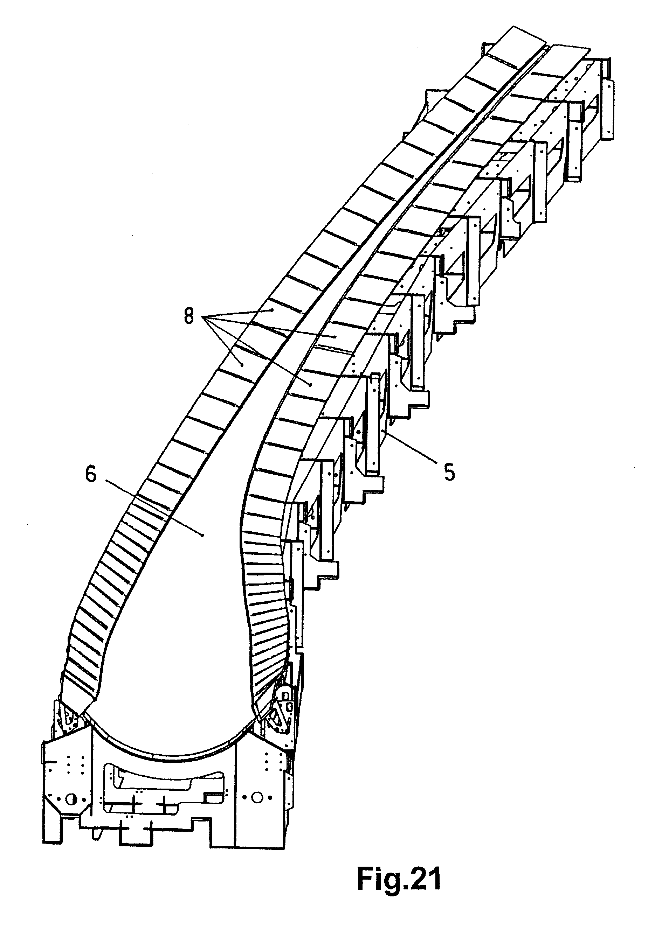

Figure 21 is an example in perspective view of a flexible mold intended to form a beam making up the framework structure of a wind turbine blade or a similar structure.
Figure 22 shows an embodiment of the supporting structure of the flexible mold according to the invention.
Figure 23 is an enlarged detail view of an attachment point of the upper surface of the flexible mold on the supporting structure.
Figure 24 shows a side view of the flexible mold according to an embodiment with a fixed central support and sliding supports sliding towards the ends to facilitate the expansions and contractions.

### Detailed Description of the Invention

The object of the invention relates to a flexible mold intended for manufacturing parts formed with composite materials such as component portions of wind turbine blades such as that described and is depicted in the Patents ES 200800641, ES 200802276 and ES 200900127 of the same owner as the present invention.

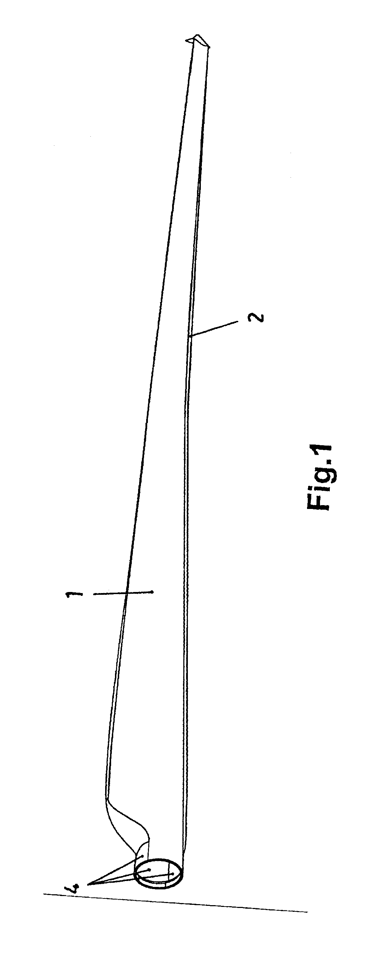

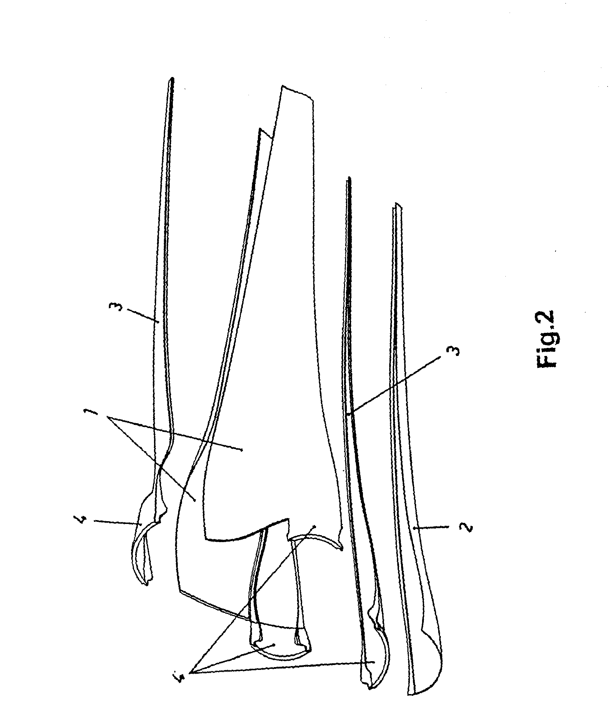

As observed in Figures 1 and 2, this type of blade comprises an outer structure formed by two sheets (1) forming the outer surface and the inner surface portions of the aerodynamic profile of the blade, and a part (2) forming the leading edge, that outer assembly being arranged on an inner framework structure formed by beams (3).

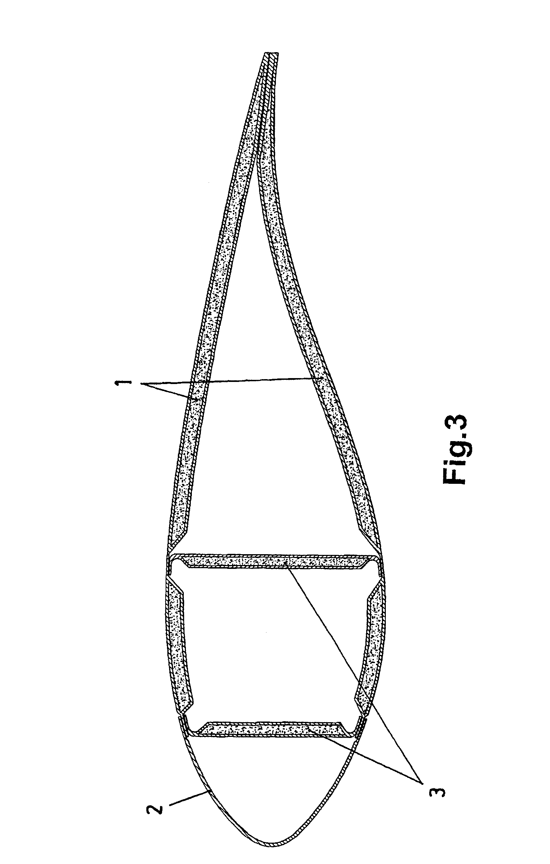

According to a particular embodiment, the sheets (1) of the outer structure and beams (3) of the inner framework structure are determined (Figure 3) with a sandwich structure to prevent twisting, said sheets (1) and said beams (3) determining prolongations (4), between which (Figures 1 and 2) a cylindrical root of the blade for securing the assembly in the corresponding wind turbine is formed.

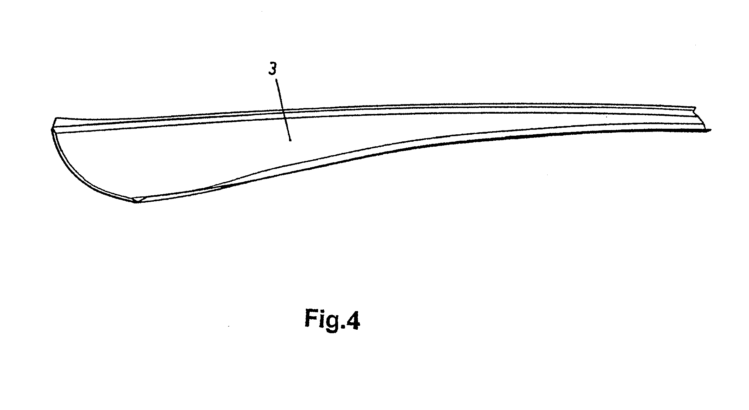

The beams (3) of the framework structure have a "U"-shaped profile, varying the width of the profile and the angle of the side wings along the length as observed in Figure 4, such that complex structures requiring very expensive molds for their manufacturing with composite materials are produced.

The present invention proposes a mold which is adaptable in a flexible manner to determine complex configurations, being suitable and advantageous for manufacturing structures such as those mentioned beams (3) of the framework structure of the wind turbine blades indicated above, without this application being limiting.

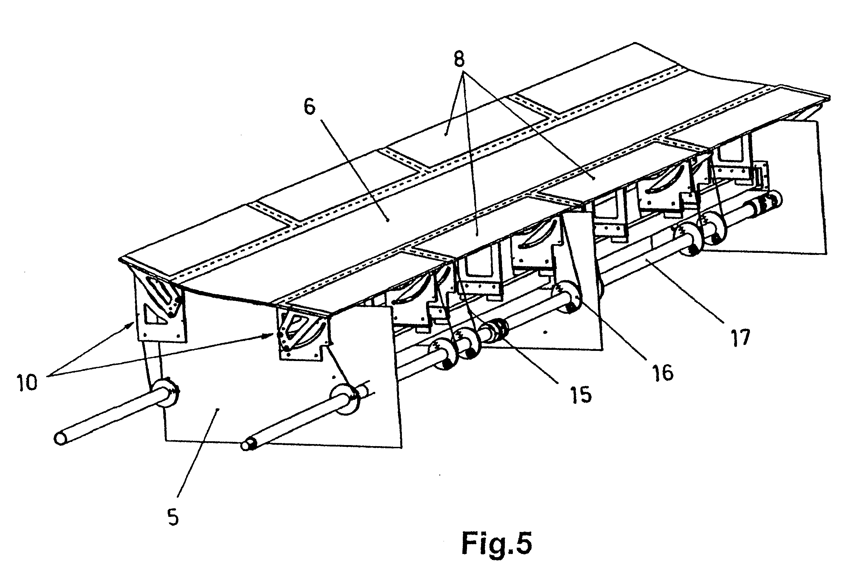

As observed in Figure 5, the flexible mold proposed has a supporting structure (5), on top of which is arranged a surface (6) intended for forming thereon the development of the parts (7) to be manufactured by means of applying taping layers with fiber strips on said surface (6).

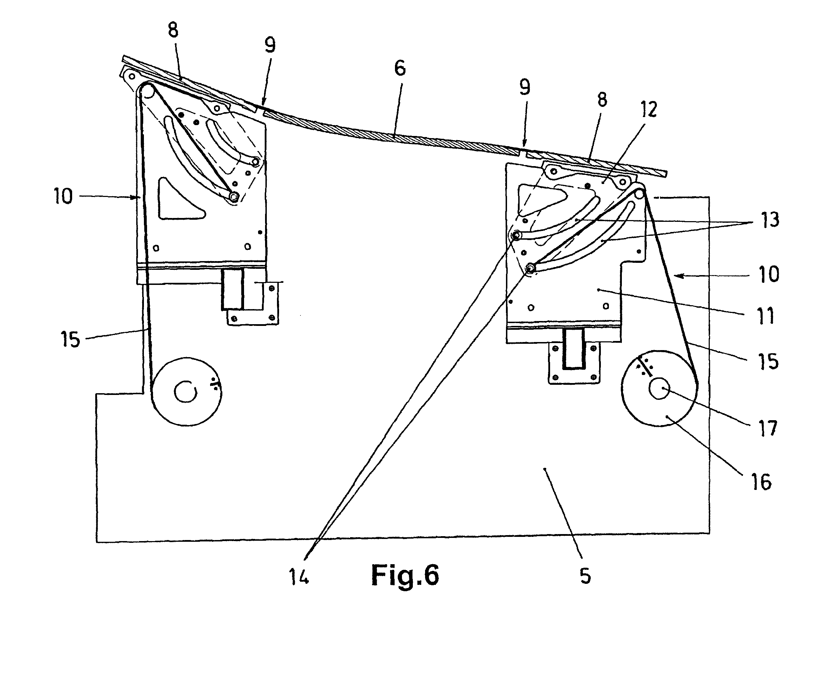

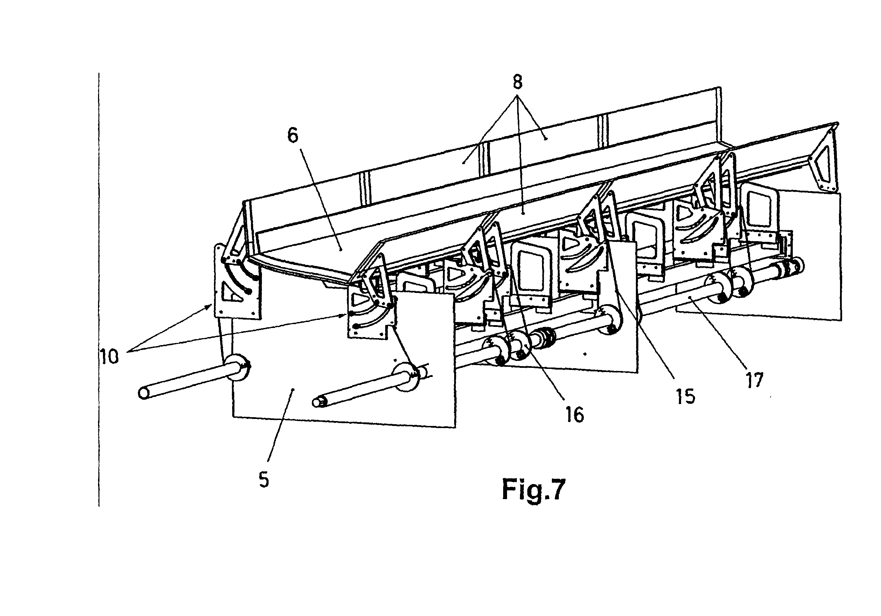

Along the side edges, the mentioned surface (6) of the upper portion of the mold incorporates a succession of flaps (8) which are attached to the central portion of said surface (6) by means of articulations (9) of elastic material as observed in Figure 6, such that said flaps (8) are susceptible to swiveling upwards rotating on the mentioned articulations (9) as observed in Figure 7, a leak-tight closure being between the flaps (8) and the central portion of the surface (6).

In relation with the flaps (8) there are arranged actuating mechanisms (10) for swiveling said flaps (8), one or more actuating mechanisms (10) being able to be in relation with each flap (8), there being provided, according to a preferred but non-limiting embodiment, two actuating mechanisms (10) in relation with each flap (8), close to the ends thereof.

Each of said actuating mechanisms (10) has a fixed portion (11) integral to the supporting structure (5), a portion of said supporting structure (5) or an accessory part being fixed by any securing means, and a moveable portion (12) which is susceptible to being swiveled with respect to the fixed portion (11), said moveable portion (12) being fixed to the corresponding flap (8) to which the mechanism belongs.

One of the portions, for example the fixed portion (11), has defined therein two curved grooves (13), with respect to which the other portion, according to the example indicated, the moveable portion (12) is coupled by means of bolts (14) establishing attachment between the two portions (11 and 12), with sliding mobility guiding said bolts (14) in the mentioned grooves (13). Similarly, without altering the concept, the arrangement can be the reverse arrangement, i.e., the grooves (13) are defined in the moveable portion (12) and the bolts (14) incorporated in the fixed portion (11), since the operation is the same therewith.

With respect to the moveable portion (12) there is attached a flexible rope or belt (15) which will be rolled up in a collection pulley (16) following a suitable path to exert a pull with respect to the mentioned moveable portion (12).

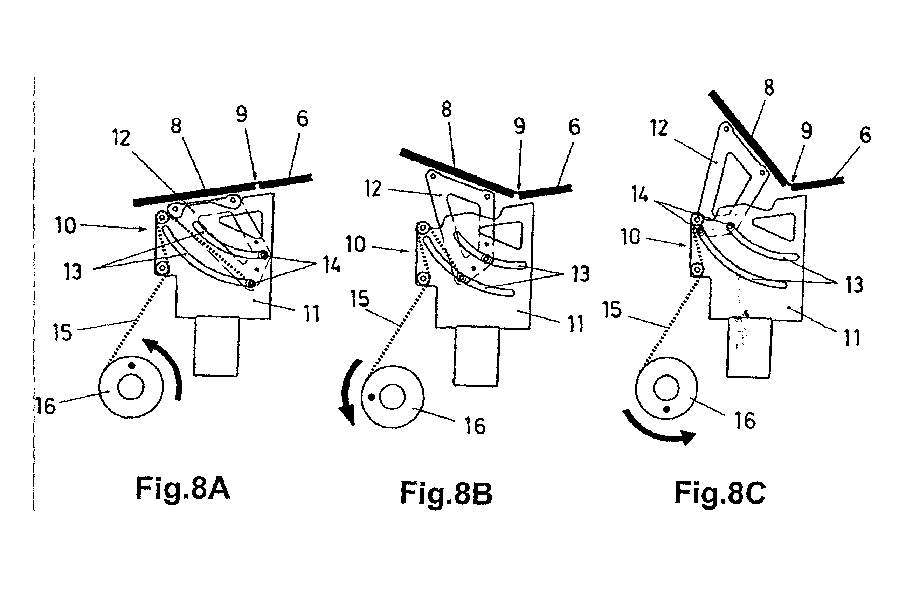

Thus, the fixed (11) and moveable (12) portions of each mechanism (10) are related by an attachment determining a double sliding guide, as a result of which, when the flexible rope or belt (15) pulls the moveable portion (12) upon being rolled up in the pulley (16) by rotating operation thereof, said moveable portion (12) moves upwards, swiveling the respective flap (8) as observed in the sequence of Figures 8A to 8C.

At each side of the mold, the pulleys (16) of all the actuating mechanisms (10) for actuating the different flaps (8) are incorporated on a common shaft (17) formed by sectors attached by means of cardan coupling as observed in Figures 5 and 7, such that by means of rotating that common shaft (17) all the succession of flaps (8) of the corresponding side swivel; that rotation of the shaft (17) being able to be operated manually by means of a crank or by means of a motor.

With this arrangement, by placing pulleys (16) of different diameters in the actuating mechanisms (10) of the different flaps (8), different swiveling movements of said flaps (8) are obtained, complex configurations of the mold to form parts (7) of variables shapes in the length thereof using a single operation for all the flaps (8) of the mold being able to be determined in that manner by means of selecting the pulleys (16) with the necessary diameters.

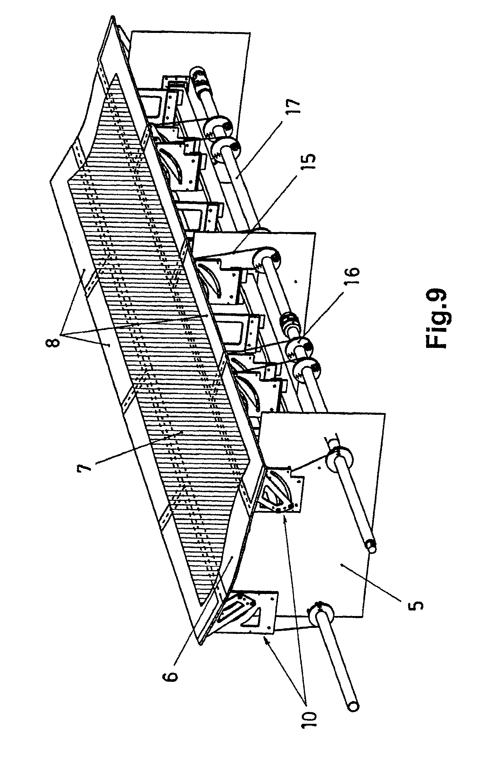

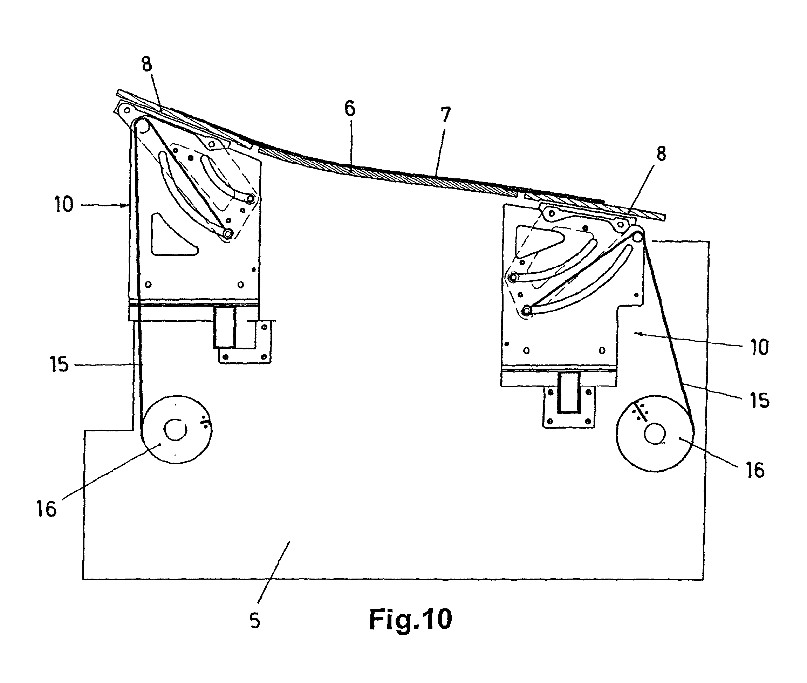

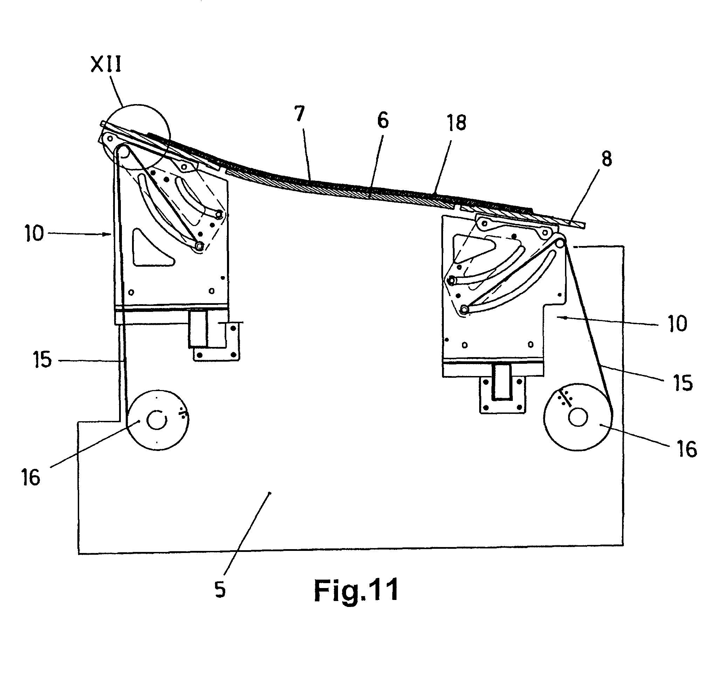

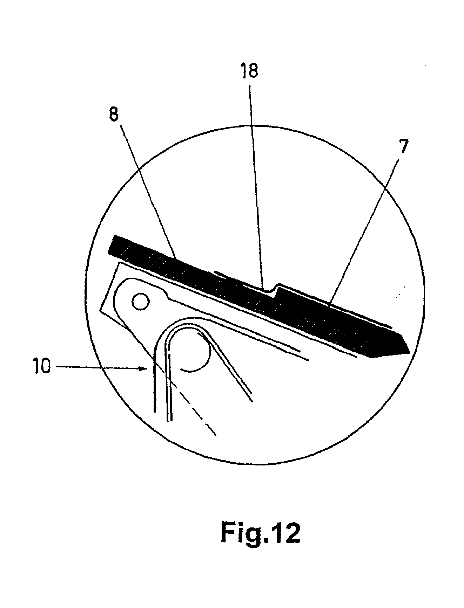

According to an example of application, to form a part (7) of "U"-shaped profile such as a beam (3) of the framework structure of a wind turbine blade as that depicted in Figure 4, the flat development of the part (7) to be made is formed on the surface (6) of the upper portion of the mold, with the flaps (8) of the edges extracted in horizontal position by means of taping of layers with strips of the construction composite material, as observed in Figures 9 and 10; a leak-tight cover sheet (18) then being arranged on said flat development of the part (7), fixing said sheet (18) on the surface (6) of the mold as observed in Figures 11 and 12 to apply a vacuum determining the compaction of the construction material of the part (7).

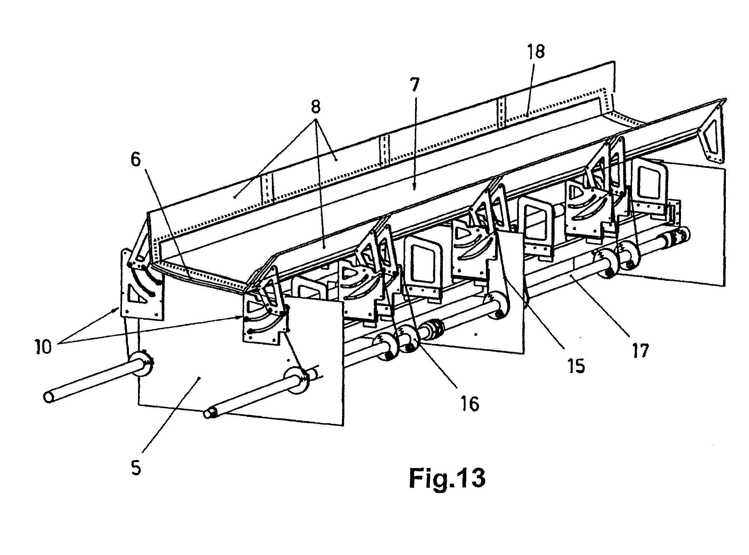

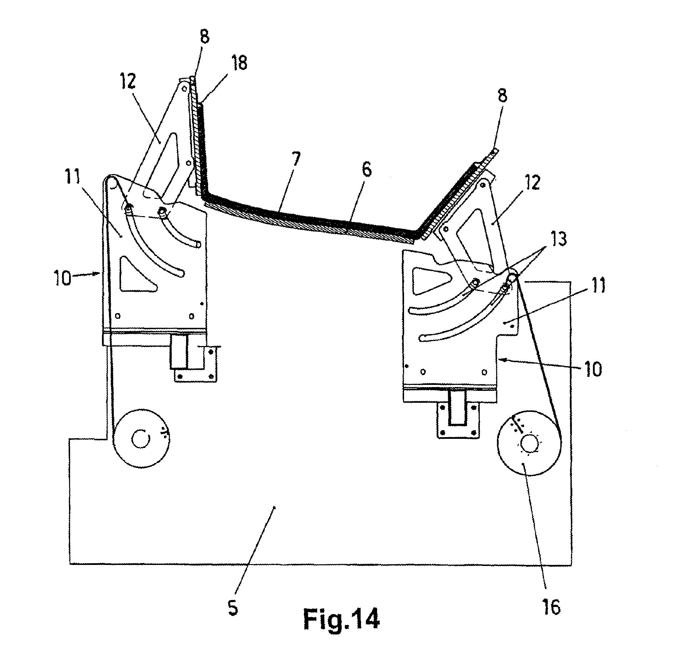

Once this is formed, the pulleys (16) of the actuating mechanisms (10) for actuating the flaps (8) are operated, causing the swiveling of said flaps (8) to the corresponding position according to the configuration of the part (7) to be made, such as shown in Figures 13 and 14.

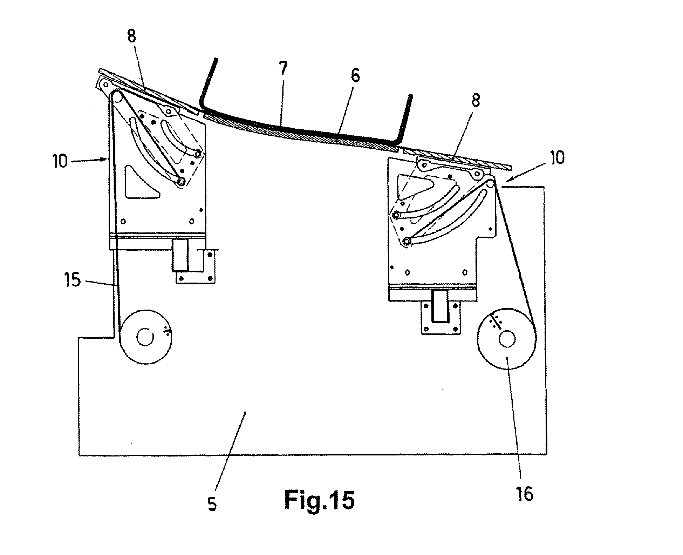

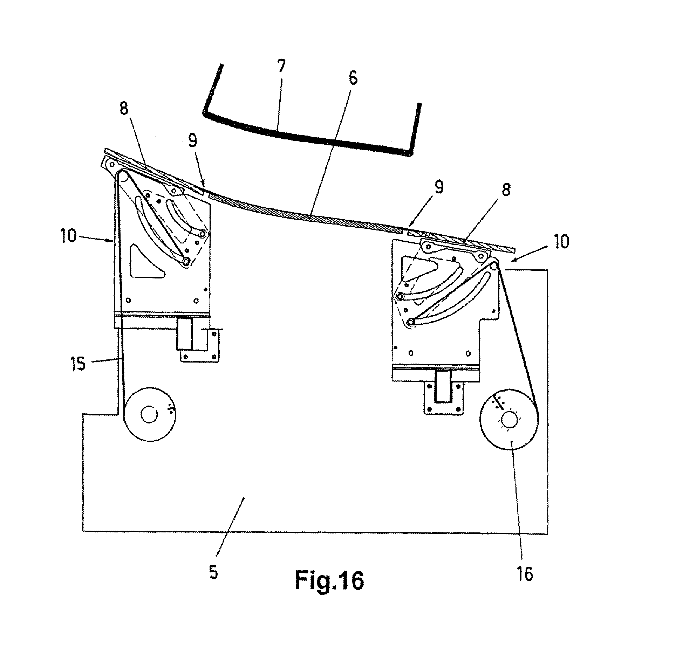

The mold is thus maintained thereon with the part (7) until the curing thereof, the flaps (8) then swivel to the initial position as shown in Figure 15, whereby the part (7) formed can be removed without any difficulty as observed in Figure 16.

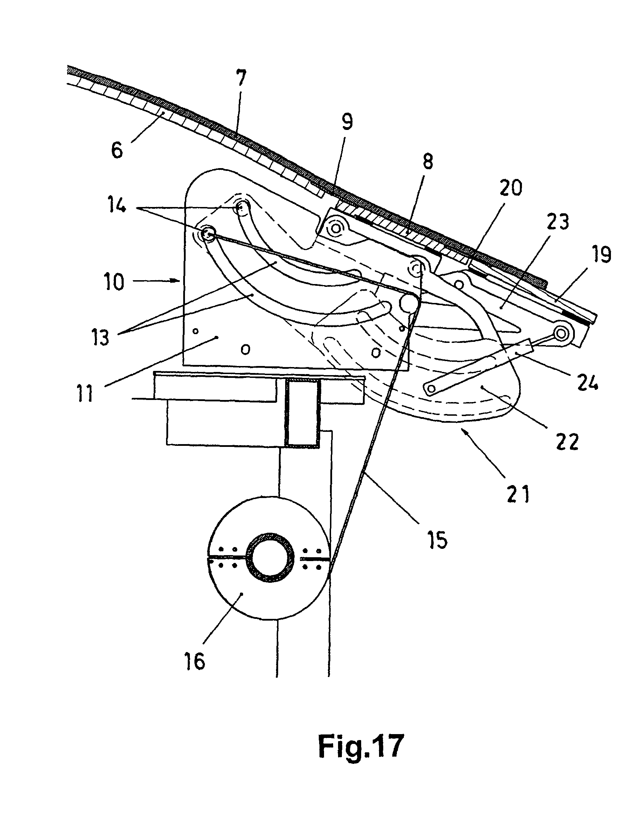

According to an embodiment (Figures 17 to 20), it is anticipated that the flaps (8) incorporate at the outer edge other complementary flaps (19), these complementary flaps (19) being in turn attached with respect to the first corresponding flaps (8) by means of articulations (20) of elastic material, with relation between one and several flaps by means of respective actuating mechanisms (21) which in turn allows swiveling the complementary flaps (19) with respect to the corresponding first flaps (8).

Each of the mentioned mechanisms (21) in turn comprises a fixed portion (22) which is attached to the moveable portion (12) of the respective mechanism (10) of the corresponding first flap (8), and a moveable portion (23) attached to the respective complementary flap (19) with relation between the mentioned fixed portion (22) and the mentioned moveable portion (23), by means of a double guide sliding attachment, similarly to the fixed (11) and moveable (12) portions of the mechanisms (10) of the first flaps (8), said mechanisms (21) having between the respective fixed portion (22) and the respective moveable portion (23), cylinders (24) which allow swiveling the complementary flaps (19) with respect to the corresponding first flaps (8).

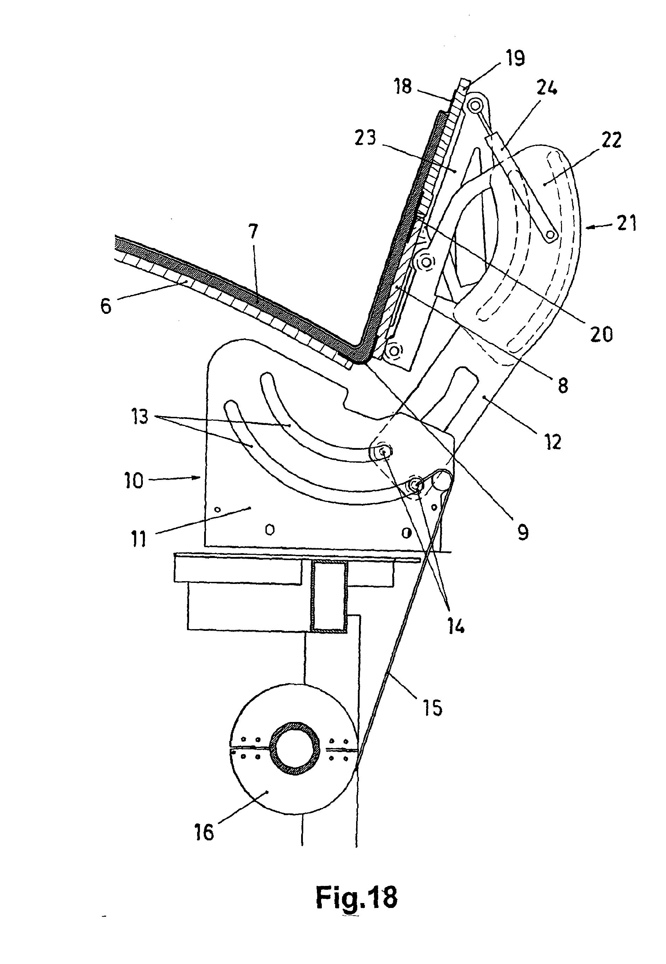

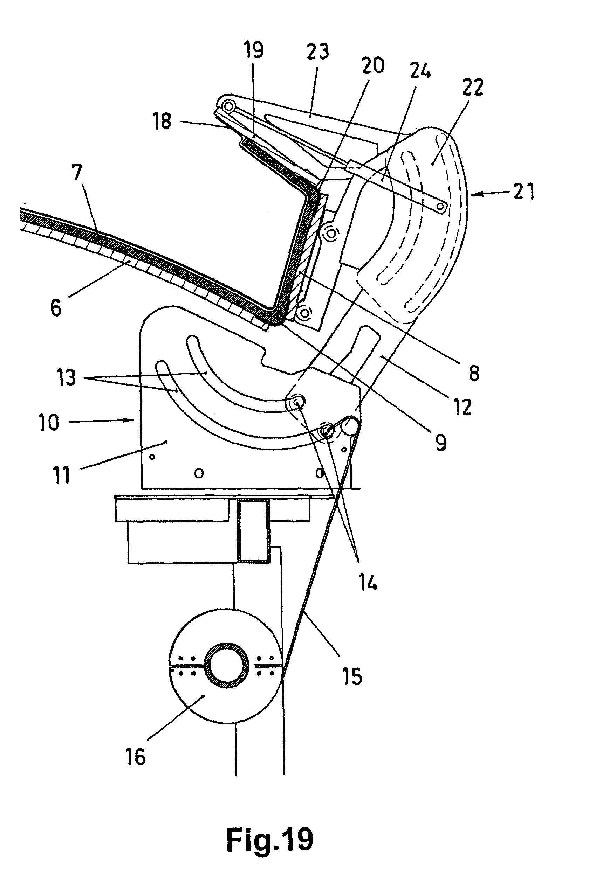

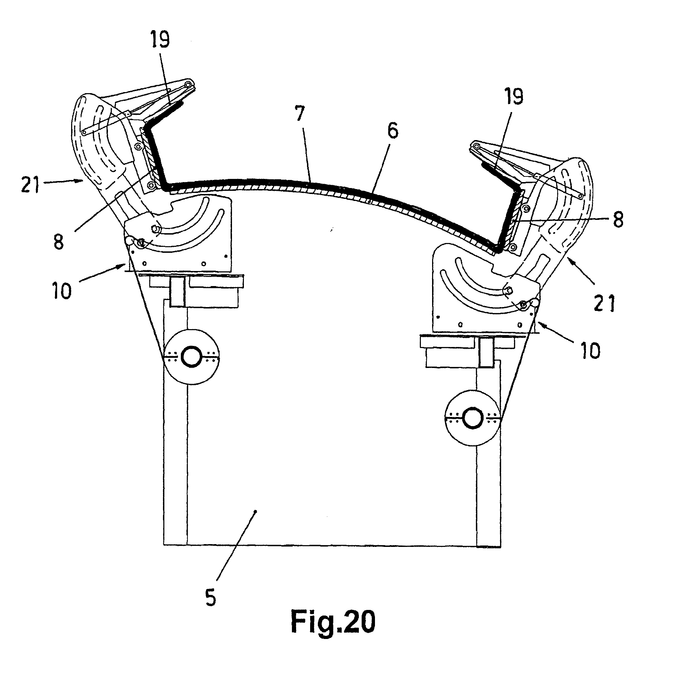

With this embodiment, the flat development of the parts (7) to be manufactured can be formed on the surface (6) of the upper portion of the mold, covering the first flaps (8) and the complementary flaps (19) as shown in the Figure 17, to then, by means of swiveling the first flaps (8) together with the complementary flaps (19), determine the configuration of the part (7) with a side wing in a certain angle, as observed in Figure 18, and then, by means of swiveling the complementary flaps (19) with respect to the first flaps (8), determine a bending of the side wing in another angle as observed in Figure 19. Thus the parts (7) of "U"-shaped profile with the side wings bended in two angles as observed in Figure 20 can be formed with the same simplicity as the parts (7) of "U"-shaped profile.

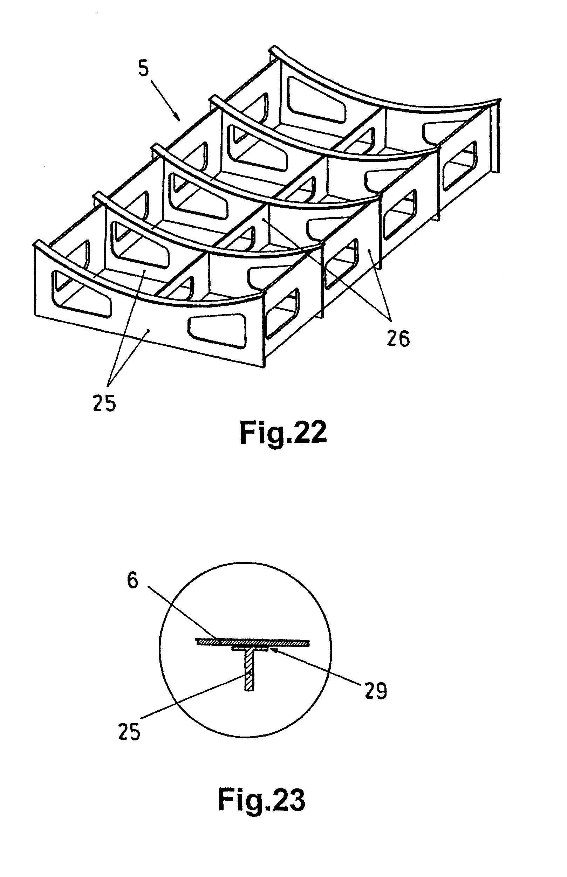

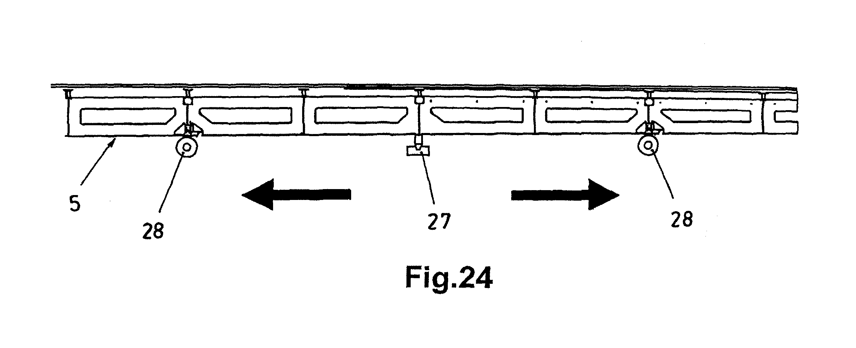

The supporting structure (5) of the mold is formed, as shown in Figure 22, by a combination of metal transversal frames (25) and longitudinal frames (26) of composite material, whereby a strong structural assembly which is capable of absorbing the expansions and contractions suffered due to the heat necessary for curing the parts (7) manufactured with the mold is obtained, an embodiment with a fixed central support (27) and sliding supports (28) sliding towards the ends as observed in Figure 24 being provided, thus facilitating the expansions and contractions of the mold.

In the constructive assembly of the mold, the surface (6) of the upper portion of the mold is supported on the transversal frames (25) of the supporting structure (5), being fixed in the supports through joining by means of adhesive (29) as observed in the detail of Figure 23.

## Claims

1. A flexible mold for manufacturing parts with composite materials comprising a supporting structure (5), on which there is arranged an upper surface (6) to form thereon the parts (7) to be manufactured by means of taping layers with fibre strip, **characterized in that** in correlation with the side edges of the upper surface (6) there are arranged a succession of flaps (8), which are attached to the central portion of the surface (6) by means of articulations (9) of elastic material, being arranged in relation with the mentioned flaps (8) actuating mechanisms (10), each of which has a fixed portion (11) and a moveable portion (12) related by means of a sliding attachment with double guide, there being attached to the moveable portion (12) a pulling rope or belt (15) which is rolled up in a collection pulley (16), such that the rotating operation of the pulley (16) determines a swiveling of the corresponding flap (8) on the articulation (9) thereof.

2. The flexible mold for manufacturing parts with composite materials according to claim 1, **characterized in that** the coupling between the fixed part (11) and the moveable part (12) of each actuating mechanism (10) is established by means of guiding with respect to two curved grooves (13) which are defined in one of the portions, in which bolts (14) integral to the other portion fit in a sliding manner.

3. The flexible mold for manufacturing parts with composite materials according to claim 1, **characterized in that** the pulleys (16) of all the actuating mechanisms (10) of the flaps (8) of each side of the surface (6) are incorporated in a common shaft (17) which can be actuated manually or with a motor, pulleys (16) of different diameters being arranged in the actuating mechanisms (10) of the different flaps (8) for moving the different flaps (8) with different swiveling angles.

4. The flexible mold for manufacturing parts with composite materials according to claim 1, **characterized in that** in relation with each flap (8) there are arranged two actuating mechanisms (10) located close to the ends thereof.

5. The flexible mold for manufacturing parts with composite materials according to claim 1, **characterized in that** the flaps (8) incorporate at the outer edge complementary flaps (19), which are attached to the first flaps (8) by means of articulations (20) of elastic material, said complementary flaps (19) being related with respect to the first corresponding flaps (8) by means of swiveling mechanisms (21), each of said mechanisms (21) being formed by a fixed portion (22) and a moveable portion (23), which are related to one another by means of sliding attachment with double guide, having operation cylinders (24).

6. The flexible mold for manufacturing parts with composite materials according to claim 1, **characterized in that** the supporting structure (5) is made up of a combination of metal transversal frames (25) and longitudinal frames (26) of composite material, the assembly being arranged with a central fixed support (27) and sliding supports (28) sliding towards the ends to facilitate the expansions and contractions.

7. The flexible mold for manufacturing parts with composite materials according to claim 1, **characterized in that** the upper surface (6) is supported on the transversal frames (25) of the supporting structure (5), with fixation by means of adhesive (29) in the points of support.
